# EUROPÄISCHE PATENTSCHRIFT

(11) **EP 2 867 146 B1**
(45) Veröffentlichungstag und Bekanntmachung des Hinweises auf die Patenterteilung: **12.08.2020**
(21) Anmeldenummer: 13737560.6
(22) Anmeldetag: 25.06.2013
(51) Int. Cl.: B65G 1/08, B65G 13/075

(54) **ZUFÜHREINRICHTUNG UND ZUFÜHRVERFAHREN**
FEED APPARATUS AND FEED METHOD
DISPOSITIF D'AMENÉE ET PROCÉDÉ D'AMENÉE

(30) Priorität: 28.06.2012 DE 202012102405 U
(43) Veröffentlichungstag der Anmeldung: 06.05.2015
(73) Patentinhaber: KUKA Systems GmbH, 86165 Augsburg (DE)
(72) Erfinder: BROCKHOFF, Per-Olaf, 86316 Friedberg (DE)
(74) Vertreter: Ernicke, Klaus Stefan
(86) Internationale Anmeldenummer: PCT/EP2013/063278
(87) Internationale Veröffentlichungsnummer: WO 2014/001333

(56) Entgegenhaltungen:
- WO-A1-02/079057
- WO-A1-2009/068241
- CH-A- 464 790
- DE-A1- 2 146 020
- DE-B- 1 278 936
- DE-U1-202010 013 497
- NL-C2- 1 021 991
- US-A- 3 108 671
- US-A- 4 351 241

## Beschreibung

Die Erfindung betrifft eine Zuführeinrichtung und ein Zuführverfahren mit den Merkmalen im Oberbegriff des Hauptanspruchs.

Eine solche Zuführeinrichtung ist aus der US 4 351 241 A bekannt. Sie zeigt eine Zuführeinrichtung mit Führungsbahnen und mit einem als Transportwagen ausgebildeten Bauteilträger mit einer Bremseinrichtung, die als Viskositätsbremse oder als Wirbelstrombremse ausgebildet. Bei diesen geschwindigkeitsabhängigen Bremstypen ist die Bremswirkung in beiden Bewegungsrichtungen bzw. Fahrtrichtungen des Bauteilträgers gleich. Auf den Führungsbahnen haben die Transportwagen stets die gleiche Bewegungsrichtung. Sie haben dabei eine vom Beladungszustand abhängige variable Fahrgeschwindigkeit. Diese wird durch unterschiedliche und im Durchmesser abgestufte, beidseitige Laufflächen der Laufrollen und durch unterschiedlich breite Führungsschienen bewirkt.

Die DE 1 278 936 A offenbart eine ähnliche Zuführeinrichtung mit Transportwagen und Wirbelstrombremsen an den Wagenrädern.

Die WO 2009/068241 A1 zeigt eine andere Zuführeinrichtung. Sie besteht aus mobilen Bauteilträgern, die auf einer abwärts geneigten Führungsbahn mittels dortiger reibungsmindernder Rollkörper durch Schwerkraft transportiert werden können. Am Bahnende und der Entnahmeseite können die Bauteilträger gestaut werden und sind hierfür an der Vorderseite jeweils mit einer Bremsnocke ausgerüstet, die im Kollisionsfall wirksam wird und für einen sanften Aufprall der Bauteilträger untereinander und an einem Endanschlag sorgt.

Die WO 02/079 057 A1, NL 1 021 991 B, US 3 108 671 A, DE 21 46 020 A, DE 20 2010 013 497 U1 und CH 464 790 B befassen sich mit Bremsrollen an Führungsbahnen.

Es ist Aufgabe der vorliegenden Erfindung, eine weiter verbesserte Zuführungstechnik aufzuzeigen.

Die Erfindung löst diese Aufgabe mit den Merkmalen im Hauptanspruch.
Die beanspruchte Zuführungstechnik, d.h. die Zuführeinrichtung und das Zuführverfahren, hat den Vorteil, dass mit einer Bremseinrichtung an einem Rollkörper die Bewegungen eines mobilen Bauteilträgers an der Führungsbahn und während der Fahrt kontrolliert werden kann. Dies kann in Anpassung an den Beladezustand und das Gesamtgewicht der Bauteilträger geschehen.

Die Zuführeinrichtung lässt sich dank der Bremseinrichtung besser und genauer an unterschiedliche Einsatzfälle und variable Einflussparameter, wie Bauteil- und Gesamtgewicht, erforderliche Bahnlänge, Belade- und Entladehöhe, Rollwiderstände oder dgl. anpassen. Sie kann bei einem Bauteilwechsel und anderer Lastsituation auch durch Änderung der Bremswirkung adaptiert werden. Dies ist besonders vorteilhaft für einen Einsatz der Zuführeinrichtung in einem automatisierten Fertigungsbetrieb.

Mit der Bremseinrichtung und der dadurch begrenzbaren Bewegungsgeschwindigkeit der Bauteilträger lassen sich außerdem Stausituationen und Bauteilträgerkollisionen besser beherrschen.

Bei der beanspruchten Zuführeinrichtung sind ein oder mehrere Rollkörper sowie eine Bremseinrichtung an einem mobilen Bauteilträger angeordnet. Die Anordnung an einem als Transportwagen ausgebildeten Bauteilträger hat den Vorteil, dass die Bremseinrichtung an allen Stellen des Fahrwegs wirksam werden und die Fahrbewegung kontrollieren kann.

Die Bremseinrichtung an einem Bauteilträger hat ferner den Vorteil, dass sie autark ist und mit der kinetischen Energie des Bauteilträgers auskommt. Eine Energiezuführung von außen und eine externe Steuerbeeinflussung sind entbehrlich. Der Bau-, Steuer- und Sicherheitsaufwand (Maschinenrichtlinie nicht einschlägig) wird minimiert. Außerdem sind solche Bauteilträger mit Bremseinrichtung universal einsetzbar. Sie können für verschiedene Zuführeinrichtungen bzw. Führungsbahnen benutzt und bei Bedarf auch ausgetauscht sowie an den neuen Einsatzbereich schnell und einfach angepasst werden. Auch bei einem Bauteilwechsel und veränderter Last ist die rasche Adaptionsfähigkeit von Vorteil.

Die Bremseinrichtung weist ein mit einem Rollkörper verbundenes Bremsmittel auf. Sie kann eine feste und vorgegebene Einstellung haben. Bevorzugt ist die Bremseinrichtung verstellbar und weist eine Steuereinrichtung für das Bremsmittel auf.

Mittels einer Selektionseinrichtung erfolgt erfindungsgemäß die Bremswirkung in Abhängigkeit von der vorwärts oder rückwärts gerichteten Bewegungsrichtung des Bauteilträgers. Dies kann in Stufen oder stufenlos geschehen. Insbesondere können mit der Selektionseinrichtung für verschiedene Bewegungsrichtungen unterschiedlich große Bremswirkungen der Bremseinrichtung eingestellt werden.

Die Führungsbahnen können gleiche oder unterschiedlich große Neigungswinkel aufweisen. Bei der Zuführung beladener und damit schwererer Bauteilträger kann die Führungsbahn z.B. eine steilere Neigung erhalten, wohingegen die Führungsbahn für die Rückfahrbewegung schwächer geneigt sein kann. Entsprechend der unterschiedlichen Neigungen und der unterschiedlichen Gewichte der beladenen und leeren Bauteilträger kann die Bremswirkung unterschiedlich eingestellt werden.

Die Bremseinrichtung kann eine Anlaufeinrichtung für einen verzögerten Eintritt der Bremswirkung aufweisen. Dies ist vorteilhaft, um eine weitgehend ungebremste Anfahrbewegung zu ermöglichen und die Bremswirkung erst später einfallen zu lassen. Dies kann zeit- und/oder geschwindigkeitsabhängig erfolgen. Hierdurch können Bewegungssicherheit erzielt und unerwünschte Stopps vermieden werden.

Die Bremseinrichtung kann eine Regulierungseinrichtung für die Bremswirkung aufweisen. Hiermit kann die Drehgeschwindigkeit eines Rollkörpers begrenzt und ggf. geregelt werden. Mit einer Regulierungseinrichtung kann die Bewegungsgeschwindigkeit des Bauteilträgers reguliert, insbesondere in der Höhe begrenzt und ggf. auch auf einen vorgegebenen Wert geregelt werden. Bei einer Regelung kann die Bremswirkung geschwindigkeitsabhängig gesteigert und reduziert werden.

Die Bremseinrichtung lässt sich in unterschiedlicher konstruktiver Weise, z.B. auch mechanisch, ausbilden. Bevorzugt wird eine elektrische Bremse, insbesondere eine elektrische generatorische Bremse. Diese lässt sich auf besonders einfache und kostengünstige sowie platzsparende Weise ausbilden und erlaubt auch eine einfache Einstellung und Steuerung. Die Selektionseinrichtung kann aufwandsarm durch eine elektrische Schaltung mit Halbleiter-Schaltelementen realisiert werden. Auch eine Anlaufeinrichtung und eine Regulierungseinrichtung können aufwandsarm durch eine elektrische Schaltung mit Halbleiter-Schaltelementen realisiert werden.

Eine generatorische Bremse weist einen mit einem Rollkörper treibfähig verbundenen elektrischen Generator auf, der z.B. als Gleichstromgenerator, vorzugsweise als schräg gewickelter Gleichstromgenerator, ausgebildet ist. Eine generatorische Bremse weist ferner einen Stromkreis und einen elektrischen Leistungsabnehmer, z.B. einen ohmschen Widerstand, auf. Der elektrische Leistungsabnehmer ist bevorzugt variabel, insbesondere steuerbar oder schaltbar, ausgebildet und mit der Steuereinrichtung verbunden. Diese kann einen Bedienschalter, insbesondere einen Wählschalter, aufweisen. Hierüber können die Anlaufeinrichtung, die Regulierungseinrichtung und/oder die Selektionseinrichtung realisiert werden. Zusätzliche Schaltelemente können z.B. eine Zenerdiode, ein Thyristor, ein Transistor oder dgl. sein.

Der Bauteilträger hat bevorzugt ein Gestell mit mehreren, insbesondere vier, Rollkörpern mit jeweils eigener Achse. Eine ausweichfähige Rollkörperlagerung sichert den Kontakt zur Führungsbahn und die vorgenannten Beeinflussungsmöglichkeiten, insbesondere die Steuerungs- und Regelmöglichkeiten, für die Bremswirkung. Vorteilhaft ist auch die Anordnung der Bremseinrichtung und eines zugeordneten Bedienschalters am Bauteilträger. Zur Führung des Bauteilträgers ist es außerdem günstig, Rollkörper mit unterschiedlich geformten Laufflächen einzusetzen, die an verschiedene Führungsmittel der Führungsbahn adaptiert sind. Für den Praxiseinsatz und die Flexibilität empfiehlt sich die Ausstattung des Bauteilträgers mit einer angepassten und ggf. wechselbaren Bauteilaufnahme für ein oder mehrere Bauteile.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine schematische Ansicht einer Zuführeinrichtung und einer Bearbeitungsstation,
- Figur 2:: eine schematische Seitenansicht eines Bauteilträgers mit einer Bremseinrichtung und Darstellung der Rad-Drehrichtungen,
- Figur 3:: eine perspektivische Ansicht eines Bauteilträgers mit Rollkörpern und einer Bremseinrichtung in Unteransicht,
- Figur 4:: einen Querschnitt eines umgedrehten Bauteilträgers gemäß Schnittlinie IV-IV von Figur 3,
- Figur 5 bis 8:: verschiedene Varianten einer Bremseinrichtung mit einer generatorischen Bremse und
- Figur 9:: eine nicht unter Anspruch 1 fallende Variante zu Figur 1 mit Anordnung einer Bremseinrichtung an einer Führungsbahn.

Die Erfindung betrifft eine Zuführeinrichtung (1) für Bauteile (3) sowie ein zugehöriges Verfahren. Die Erfindung betrifft ferner eine Bearbeitungsstation (2), die mit mindestens einer Zuführeinrichtung (1) ausgerüstet ist.

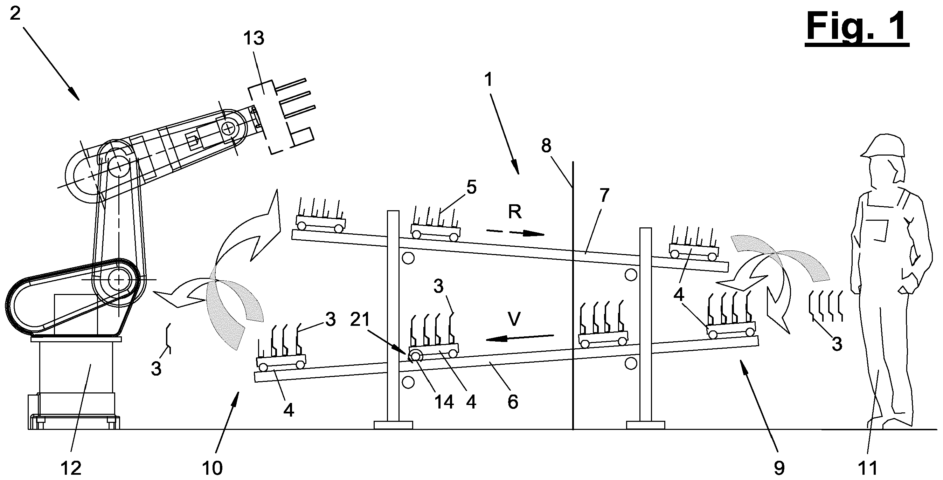

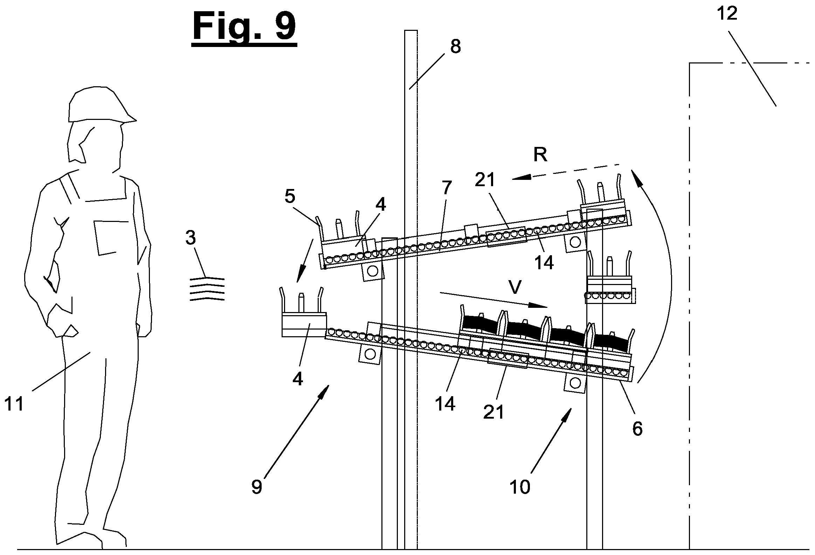

Die Zuführeinrichtung (1) weist in beiden Varianten von Figur 1 und 9 eine Führungsbahn (6,7) und einen mobilen Bauteilträger (4) sowie Rollkörper (14) auf. In Figur 1 sind die Rollkörper (14) an dem als Transportwagen ausgebildeten Bauteilträger (4) angeordnet. In der Variante von Figur 9 sind die Rollkörper (14) an der als Rollbahn ausgeführten Führungsbahn (6,7) angeordnet.

Der Bauteilträger (4) kann mit ein oder mehreren Bauteilen (3) lösbar beladen werden. Die Bauteile (3) können von beliebiger Art und Größe sein. Bevorzugt handelt es sich um Karosseriebauteile von Fahrzeug-Rohkarosserien, insbesondere um Blechteile.

Die Zuführeinrichtung (1) weist mehrere, z.B. die gezeigten zwei Führungsbahnen (6,7) auf. Die mehreren Führungsbahnen (6,7) sind an einem Gestell angeordnet und haben jeweils eine abwärts gerichtete Neigung für den rollenden Transport der Bauteilträger (4) durch Schwerkraft. Die Zuführbahn(en) (6,7) können eine Zuführ- und/oder Rückführfunktion für einen Bauteilträger (4) aufweisen. Der Bauteilträger (4) kann ebenfalls mehrfach vorhanden sein.

Die Führungsbahn (6) ist z.B. als Zuführbahn für beladene Bauteilträger (4) ausgebildet und erstreckt sich von einer Beladestelle (9) schräg nach unten zu einer tiefer liegenden Entladestelle (10). Eine solche Zuführbahn (6) kann auch mehrfach vorhanden sein. Die Führungsbahn (7) ist als Rückführbahn für leere Bauteilträger (4) ausgebildet und hat an der Entladestelle (10) eine größere Höhe als an der Beladestelle (9). Die Führungsbahn (7) kann ebenfalls mehrfach vorhanden sein. Die Führungsbahnen (6,7) sind getrennt voneinander und z.B. mit Abstand übereinander an einem bevorzugt gemeinsamen Gestell angeordnet. Die Zuführbahn (6) ist unten angeordnet und hat mit ihrem Ende (9) an der Beladestelle (9) eine ergonomische beladegünstige Höhe. Die Rücklaufbahn (7) ist darüber angeordnet. Diese Bahnanordnung kann auch umgedreht sein.

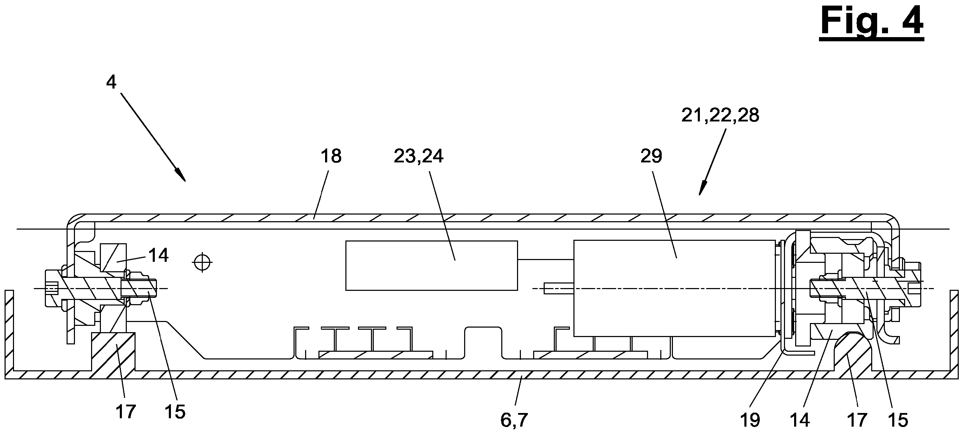

Die Führungsbahnen (6,7) haben eine endliche Länge. Sie besitzen eine vorzugsweise gerade Erstreckung und weisen ein oder mehrere geeignete Führungsmittel (17) für die Bauteilträger (4) auf. Die Führungsmittel (17) können z.B. gemäß Figur 4 als Führungsschienen an einem wannenartigen Schienenträger ausgebildet sein, der mit seinen aufrechten Seitenwänden eine zusätzliche Führungsfunktion für die Bauteilträger (4) haben kann.

Die Führungsbahnen (6,7) können gemäß Figur 1 und 9 unterschiedlich große Neigungswinkel gegen der Horizontalen haben. Die Führungsbahn (6) für die Zuführung beladener Bauteilträger (4) kann z.B. eine größeren Neigungswinkel aufweisen und steiler abwärts geneigt sein als die Führungsbahn (7) für die Rückführung der leeren Bauteilträger (4). Die bevorzugt feste Einstellung der Neigungswinkel erfolgt bei der Montage am Gestell.

Die Bauteilträger (4) können zwischen den Führungsbahnen (6,7) in geeigneter Weise umgesetzt werden. Sie wandern dadurch in einem Kreislauf an der Zuführeinrichtung (1) und bewegen sich auf den Führungsbahnen (6,7) in entgegengesetzten Richtungen. In den Zeichnungen wird die Bewegungsrichtung auf der Zuführbahn (6) als Vorwärtsrichtung (V) und auf der Rücklaufbahn (7) als Rückwärtsrichtung (R) bezeichnet. Die betroffenen Rollkörper (14) haben dabei eine entsprechende Drehrichtung, die ebenfalls mit (V) und (R) bezeichnet wird.

An der Beladestelle (9) werden leere Bauteilträger (4) von der Rücklaufbahn (7) auf die Zuführbahn (6) umgesetzt und mit ein oder mehreren Bauteilen (3) beladen. Hierfür ist an der Beladestelle (9) eine Anlieferung (11) angeordnet. Dies ist in der gezeigten Ausführungsform ein Werker, der das Umsetzen und Beladen vornimmt. Alternativ können beide Vorgänge automatisiert und durch ein Förder- und Handhabungsgerät (nicht dargestellt) ausgeführt werden. Ferner kann zur verbesserten Ergonomie ein Endabschnitt der Führungsbahnen an der Beladestelle höhenverstellbar ausgebildet und mit einer pneumatischen Hubunterstützung für die Handkraft verbunden sein.

An der Entladestelle (10) werden die Bauteile (3) einzeln oder in ein oder mehreren Gruppen entladen und vom Bauteilträger (4) abgenommen. Dies kann manuell oder automatisiert durch eine Bearbeitungseinrichtung (12) erfolgen. Die Bearbeitungseinrichtung (12) kann z.B. einen in Figur 1 dargestellten mehrachsigen Roboter, insbesondere Gelenkarmroboter, mit einer Greifeinrichtung (13) aufweisen. Dieser kann den Entladevorgang durchführen und ggf. auch den geleerten Bauteilträger (4) von der Zuführbahn (6) auf die Rücklaufbahn (7) umsetzen. Alternativ kann das Entladen und das Umsetzen der Bauteilträger (4) auf andere Weise und durch andere und ggf. getrennte Vorrichtungen, z.B. eine Entlade- und Hubvorrichtung, erfolgen. Hierfür kann an der Entladestelle (10) ein Endabschnitt der Führungsbahnen (6,7) höhenverstellbar angeordnet und gesteuert angetrieben sein, der sich an die jeweilige Bahnneigung anpasst und in geeigneter Weise, insbesondere fluchtend, andockt.

An der Entladestelle (10) werden die beladenen Bauteilträger (4) durch eine Positioniereinrichtung angehalten und in einer vorgegebenen, entladegünstigen Lage positioniert. Hierbei können auch mehrere beladene Bauteilträger (4) aufgestaut werden. Die Gestaltung der Führungsbahn (6,7) an der Entladestelle (10) kann die gleiche wie in der WO 2009/068241 A1 sein.

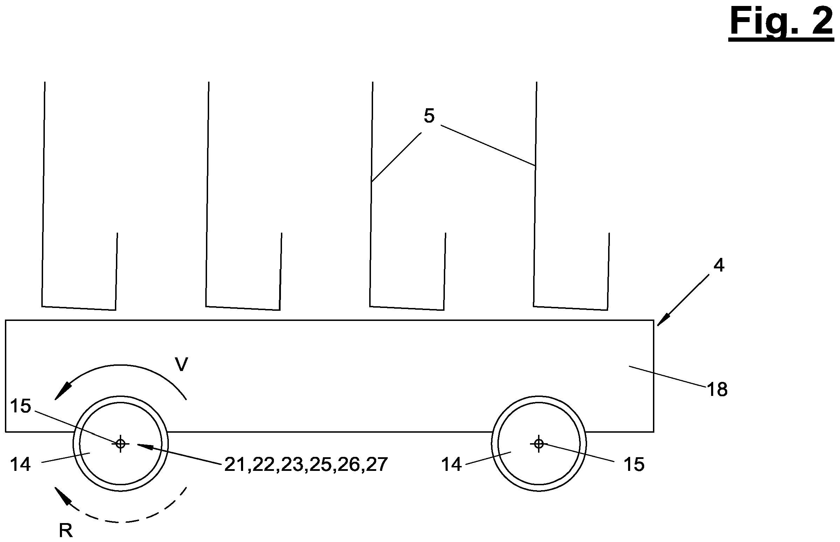

In Figur 2 ist ein Bauteilträger (4) schematisch dargestellt, der bei einer Zuführeinrichtung (1) gemäß Figur 1 zum Einsatz kommt. Er besteht aus einem Gestell (18) mit einer oder mehreren ggf. lösbaren und austauschbaren Bauteilaufnahmen (5), die an die Bauteile (3) (nicht dargestellt) adaptiert sind. Am Gestell (18) sind mehrere Rollkörper (14) drehbar gelagert, die vorzugsweise jeweils eine einzelne drehende Achse (15) oder Welle aufweisen und als Räder ausgebildet sind.

Bei der Variante von Figur 9 haben die Bauteilträger (4) keine Räder und besitzen ein kastenförmiges Gestell, wobei die Rollkörper (14) an der jeweiligen Führungsbahn (6,7) angeordnet und z.B. als Rollen oder Walzen ausgebildet sind. Die Führungsmittel sind entsprechend angepasst.

Die Zuführeinrichtung (1) weist in den jeweiligen Ausführungsvarianten eine Bremseinrichtung (21) auf, die einem Rollkörper (14) zugeordnet ist. Die Bremseinrichtung (21) kann mehrfach vorhanden sein. Eine Bremseinrichtung (21) kann außerdem mehreren Rollkörpern gemeinsam zugeordnet sein. In der Variante von Figur 1 bis 4 ist mindestens eine Bremseinrichtung (21) an einem Bauteilträger (4) angeordnet. Bei der Variante von Figur 9 befindet sich an mindestens einer Führungsbahn (6,7) mindestens eine Bremseinrichtung (21).

Die Bremseinrichtung (21) bremst den oder die zugeordneten Rollkörper (14). Sie weist hierfür ein Bremsmittel (22) auf, das mit einem oder mehreren Rollkörpern (14) verbunden ist. Die Bremseinrichtung (21) kann außerdem eine Steuereinrichtung (23) für das Bremsmittel (22) aufweisen. Im einfachsten Fall kann die Steuereinrichtung (23) entfallen und das Bremsmittel (22) eine Festeinstellung haben.

Die Bremseinrichtung (21) weist eine Selektionseinrichtung (27) für eine von der Bewegungsrichtung (V,R) abhängige Bremswirkung auf. Diese Abhängigkeit kann sich auf die Fahrrichtung des mobilen Bauteilträgers (4) bzw. auf die entsprechende Drehrichtung des oder der betroffenen Rollkörper(s) (14) beziehen. Die Selektionseinrichtung (27) kann z.B. die Fahrtrichtung bzw. die Drehrichtung eines Rollkörpers (14) detektieren und in Abhängigkeit vom Detektionsergebnis unterschiedliche Bremswirkungen veranlassen. Hierbei kann z.B. nur in einer Bewegungsrichtung gebremst werden und in der anderen nicht. In den gezeigten Ausführungsbeispielen könnte z.B. eine Bremswirkung nur bei Vorwärtsfahrt der beladenen Bauträger (3) auf der Führungsbahn (6), aber nicht bei Rückwärtsfahrt in Gegenrichtung auf der Rücklaufbahn (7) eintreten.

In Abhängigkeit vom Detektionsergebnis können andererseits unterschiedlich große Bremswirkungen veranlasst werden, wobei z.B. bei Vorwärtsfahrt (V) eines beladenen Bauteilträgers (4) die Bremswirkung größer als bei Rückwärtsfahrt (R) eines leeren Bauteilträgers (4) ist. Durch den Kreislauf und das endseitige Umsetzen an den Führungsbahnen (6,7) haben die Bauteilträger (4) definierte Bewegungs- und Fahrtrichtungen. Die Bauteilträger (4) können hierauf adaptiert sein und können eine Richtungsmarkierung (nicht dargestellt) für eine eindeutige Orientierung und Richtungszuordnung aufweisen.

Die Bremseinrichtung (21) kann zusätzlich eine Anlaufeinrichtung (25) aufweisen, die für einen verzögerten Eintritt der Bremswirkung sorgt. Wenn ein zunächst ruhender Bauteilträger (4) seine Bewegung startet, kann durch die Anlaufeinrichtung (25) die Bremswirkung abgeschaltet oder minimiert werden. Die Bremswirkung setzt erst später ein, wenn eine vorgegebene Bewegungsgeschwindigkeit des Bauteilträgers (4) erreicht ist und/oder wenn eine voreingestellte Zeitspanne abgelaufen ist. Alternativ oder zusätzlich kann die Anlaufeinrichtung (25) andere Parameter erfassen und auswerten, mit denen ein Bewegungsanlauf und das Erreichen einer genügend hohen kinetischen Energie für eine sichere Weiterbewegung eines Bauteilträgers (4) detektiert werden können.

Die Bremseinrichtung (21) kann zusätzlich eine Regulierungseinrichtung (26) für die Bremswirkung aufweisen. Mit der Regulierungseinrichtung (26) kann z.B. die Bewegungsgeschwindigkeit bzw. Fahrgeschwindigkeit eines Bauträgers (4) bzw. die damit gekoppelte Drehgeschwindigkeit eines Rollkörpers (14) gezielt beeinflusst werden. Die besagten Geschwindigkeiten können einerseits nach oben auf einen Maximalwert begrenzt werden. Sie können auch auf einen vorgegebenen Wert geregelt werden. Bei einer Regelung kann die Bremswirkung in der Größe verändert, insbesondere auch zeitweise abgeschaltet werden.

In der einfachsten Ausführungsform einer Bremseinrichtung (21) kann auf die vorgenannten Einrichtungen (25,26) verzichtet werden. Alternativ kann die Bremseinrichtung (21) nur eine der vorgenannten Einrichtungen (25,26) oder eine beliebige Kombination von diesen Einrichtungen (25,26,27) aufweisen. Dementsprechend unterschiedlich kann auch die Steuereinrichtung (23) für das Bremsmittel (22) ausgebildet sein. Mit der Steuereinrichtung (23) kann die Bremswirkung der Bremseinrichtung (21) in Stufen einstellbar oder stufenlos steuerbar sein.

Die Bremseinrichtung (21) und das Bremsmittel (22) sowie ggf. die Steuereinrichtung (23) können in unterschiedlicher Weise konstruktiv und funktional ausgebildet sein. Das Bremsmittel (22) ist vorzugsweise als elektrische oder mechanische Bremse ausgebildet.

Eine mechanische Bremse kann z.B. mit Reibung an einem Rollkörper (14) arbeiten. Die Selektionseinrichtung (27) kann z.B. durch einen Freilauf realisiert werden. Eine Anlaufeinrichtung (25) lässt sich z.B. mit einem Fliehkraftregler bilden, wobei über eine entsprechende Geschwindigkeitserfassung auch eine Regulierungseinrichtung (26) ausführbar ist.

Eine elektrische Bremse (22) kann ebenfalls in unterschiedlicher Weise ausgebildet sein. Eine Bremswirkung kann z.B. mit elektromagnetischen Wechselfeldern erzielt werden, die geschwindigkeitsabhängig oder ggf. auch drehrichtungsabhängig sind. Eine elektrische Bremse kann z.B. als Wirbelstrombremse, als Magnetbremse oder dergleichen ausgestaltet sein.

In den gezeigten und bevorzugten Ausführungsvarianten ist das Bremsmittel (22) als elektrische generatorische Bremse (28) ausgebildet. Bei einer elektrischen Bremse, insbesondere einer generatorischen Bremse (28), ist die Selektionseinrichtung (27), als elektrische Schaltung ausgebildet. Eine Anlaufeinrichtung (25) und/oder eine Regulierungseinrichtung (27) können auch vorhanden und als elektrische Schaltung(en) ausgebildet sein.

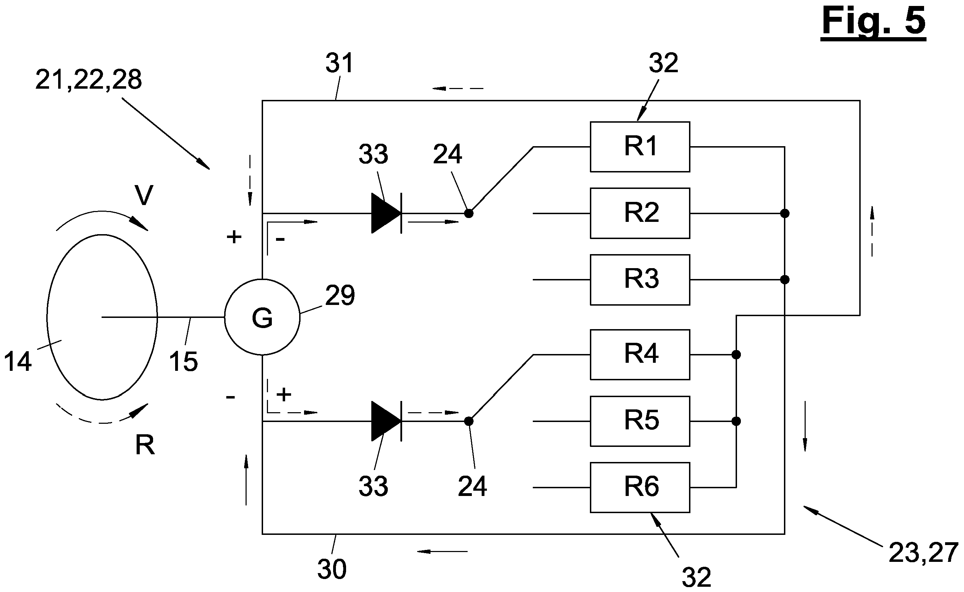

Figur 5 bis 8 zeigen verschiedene Varianten einer generatorischen Bremse (28). Diese besteht jeweils aus einem elektrischen Generator (29) als Spannungsquelle, der einerseits mit einem Rollkörper (14) mechanisch treibend verbunden ist und der andererseits über mindestens einen Stromkreis (30,31) mit mindestens einem elektrischen Leistungsabnehmer (32) bzw. einer Last elektrisch leitend verbunden ist. Der Generator (29) ist vorzugsweise als Gleichstromgenerator ausgebildet, der bevorzugt eine schräge Wicklung für Lastmomentenfreiheit aufweist.

Für die generatorische Bremse (28) gibt es verschiedene Gestaltungsmöglichkeiten. Auf der mechanischen Antriebsseite ist z.B. der Generator (29) mit der drehenden Achse oder Welle eines einzelnen Rollkörpers (29) drehfest verbunden. Alternativ kann eine Verbindung mit mehreren Rollkörpern über ein zwischengeschaltetes Getriebe und einer Generatorankopplung an die Getriebeabtriebswelle bestehen.

Durch einen Gleichstromgenerator (29) kann auf besonders einfache Weise eine Selektionseinrichtung (27) realisiert werden, wobei der Gleichstromgenerator (29) an seinen Klemmen eine Gleichspannung mit einer von der Drehrichtung des oder der Rollkörper (14) abhängigen Polung abgibt. Die Spannungshöhe ist ferner geschwindigkeitsabhängig. Der Generator (29) ist dabei in den Varianten von Figur 5 bis 8 jeweils mit zwei Stromkreisen (30,31) verbunden, die jeweils eine Diode (33) aufweisen und je nach Generatorpolung bestromt werden. Jeder Stromkreis (30,31) hat dabei seinen eigenen elektrischen Leistungsabnehmer (32). Die Leistungsabnehmer (32) können unabhängig voneinander ausgelegt und bei Bedarf in Stufen geschaltet oder stufenlos gesteuert werden.

In den gezeigten Ausführungsbeispielen sind die beiden elektrischen Leistungsabnehmer (32) aus ohmschen Widerständen aufgebaut, in denen die vom Generator (29) abgegebene elektrische Leistung in Wärme umgewandelt und hierüber ein auf den oder die Rollkörper (14) rückwirkender Bremseffekt erzielt wird. Im einfachsten Fall weist jeder Leistungsabnehmer (32) einen einzigen ohmschen Widerstand auf.

In den gezeigten Ausführungsbeispielen sind die Leistungsabnehmer (32) in Stufen schaltbar und bestehen jeweils aus einer Gruppe von z.B. drei unterschiedlich großen ohmschen Widerständen (R1, R2, R3) und (R4, R5, R6). Die Steuereinrichtung (23) weist einen Wählschalter (24) auf, mit dem in den Stromkreisen (30,31) unabhängig voneinander ein jeweiliger Widerstand (R1 - R3) bzw. (R4 - R6) ausgewählt und aufgeschaltet werden kann. Die Größe der elektrischen Leistungsabnehmer (32) bzw. ihrer ohmschen Widerstände und die damit einhergehende Bremswirkung kann für Vorwärtsfahrt (V) und Rückwärtsfahrt (R) bzw. die jeweiligen Drehrichtungen eines Rollkörpers (14) getrennt eingestellt werden. Insbesondere kann für Vorwärtsfahrt (V) wegen der stärkeren Bahnneigung und/oder des höheren Gesamtgewichts des Bauteilträgers (4) eine größere Bremswirkung als bei Rückwärtsfahrt (R) eingestellt werden. Die Bauteile (3) können im Gewicht variieren, wobei die Bremswirkung durch Wahl eines entsprechend großen Widerstands (R1 - R3) angepasst werden kann.

In Figur 5 bis 8 sind jeweils die Vorwärtsrichtung (V) und die zugehörige Stromlaufrichtung im zugeordneten Stromkreis (30) mit durchgezogenen Strichen und die Rückwärtsrichtung (R) und die Stromlaufrichtung im zugehörigen Stromkreis (31) mit gestrichelten Linien dargestellt.

In der einfachsten Ausführungsform von Figur 5 ist über die besagten Dioden (33) eine Selektionseinrichtung (27) realisiert, wobei die Größe der Bremswirkung über die Widerstände (R1 - R3) und (R4 - R6) für Vorwärts- und Rückwärtsfahrt getrennt und in Stufen über den Wählschalter (24) einstellbar ist. Bei dieser einfachsten Ausführungsform sind die elektrischen Leistungsabnehmer (32) bei jeder Rollkörperbewegung wirksam und haben eine gleichbleibende Größe.

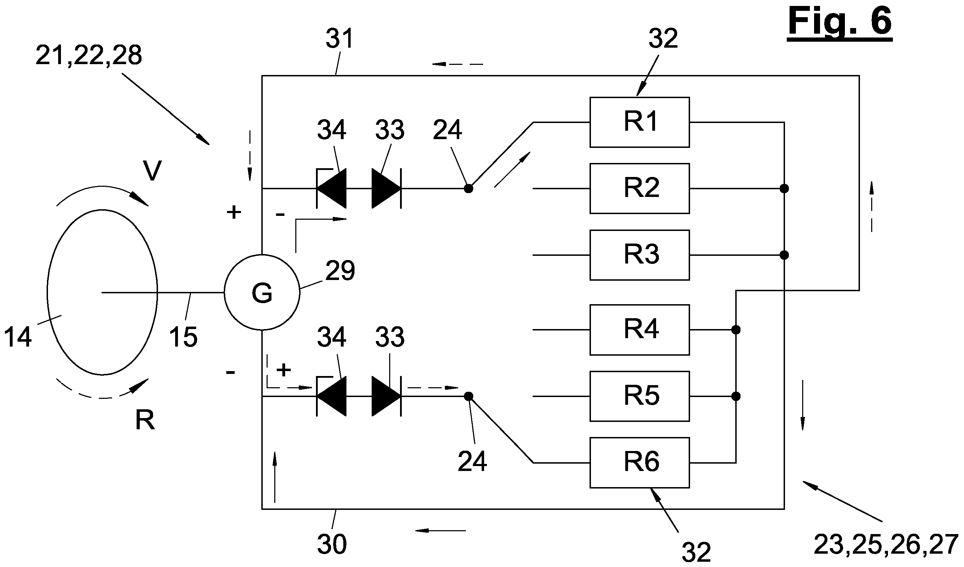

In der Variante von Figur 6 ist zusätzlich zur Selektionseinrichtung (27) eine Anlaufeinrichtung (25) realisiert, wobei z.B. in jeden Stromkreis (30,31) zu der jeweiligen Diode (33) eine Zenerdiode (34) in Reihe geschaltet ist, die erst bei Erreichen einer elektrischen Mindestspannung und einer zugehörigen Bewegungsgeschwindigkeit (V,R) auf Durchlass schaltet und den jeweiligen Stromkreis (30,31) bestromt. Die Zenerdioden (34) für die Stromkreise (30,31) können gleich oder unterschiedlich sein, woraus ein gleiches oder unterschiedliches Anlaufverhalten resultiert. Bis zum Durchschalten der Zenerdiode (34) entfaltet die generatorische Bremse (28) keine oder nur eine minimale Bremswirkung.

Mit der elektrischen Schaltung von Figur 6 kann unter Umständen auch eine Regulierungseinrichtung (26) realisiert werden. Wenn in einem Stromkreis (30,31) die Größe der Leistungsumwandlung und die dadurch erzielte Bremswirkung so hoch gewählt werden kann, dass die Bewegungsgeschwindigkeit (V,R) und damit die Generatorspannung wieder unter die Durchlassspannung der zugehörigen Zenerdiode (34) fällt, kann diese wieder eine Sperrwirkung entfalten und die Bremswirkung reduzieren bzw. abschalten. Der Bauteilträger (4) bewegt sich dann analog zur Anlaufphase wieder weitgehend ungebremst, bis die mit der folgenden Geschwindigkeitserhöhung einher gehende Generatorspannung wieder größer als die Durchlassspannung wird und Bremswirkung eintritt.

Wenn hingegen eine kleinere Größe der Leistungsumwandlung und Bremswirkung gewählt wird, kann die Bremswirkung kleiner als die Zunahme der kinetischen Energie sein, so dass die Bewegungsgeschwindigkeit (V,R) des Bauteilträgers (4) entlang einer Führungsbahn (6,7) zunehmen kann, wenn auch mit geringerer Steigung.

Ansonsten stimmen die generatorischen Bremsen (28) und ihre elektrischen Schaltungen in Figur 5 und 6 überein.

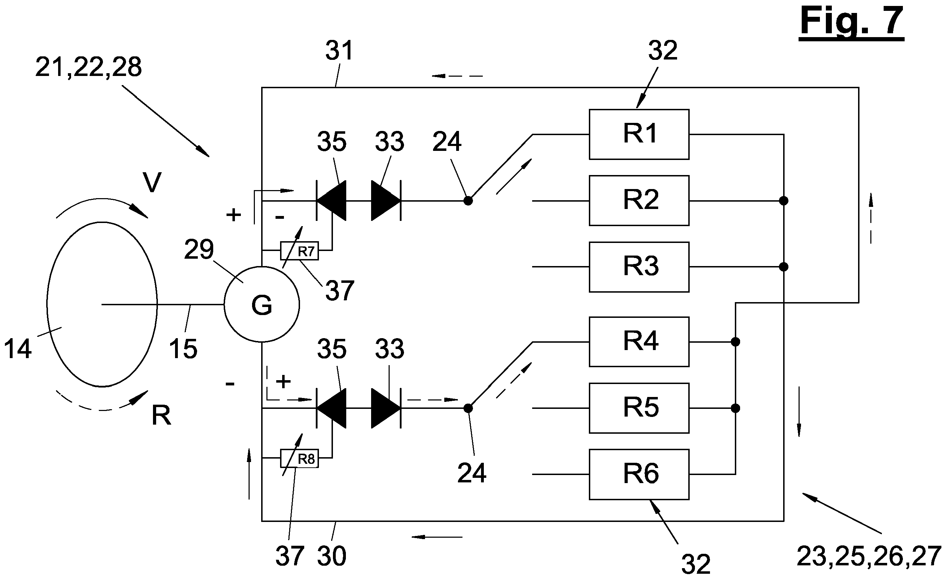

Figur 7 zeigt auf der Basis von Figur 5 eine weitere Variante einer generatorischen Bremse (28) mit der vorbeschriebenen Selektionseinrichtung (27). Zu den Dioden (33) in den Stromkreisen (30,31) ist jeweils ein Thyristor (35) in Reihe geschaltet. In Variation zu Figur 6 ersetzt dieser die dortigen Zenerdioden (34). Durch die Thyristorschaltung wird ebenfalls eine Anlaufeinrichtung (25) und eine Regulierungseinrichtung (26) realisiert. Die Thyristoren (35) sind durch Stellelemente (37), insbesondere Widerstände (R7) und (R8) einstellbar. Der jeweilige Stromkreis (30,31) wird durch den jeweiligen Thyristor (35) bei anfänglich geringer Bewegungsgeschwindigkeit (V,R) und somit geringer Generatorspannung unterbrochen, wobei die Bremswirkung in der Anlaufphase aufgehoben oder weitgehend reduziert wird. Mit zunehmender Bewegungsgeschwindigkeit (V,R) und somit steigender Generatorspannung wird die Schaltspannung am Gate des jeweiligen Thyristors (35) erreicht. Der zunächst in Sperrstellung befindliche Thyristor (35) schaltet dann durch und bestromt den zugehörigen Stromkreis (30,31), wobei über den jeweils geschalteten bzw. eingestellten Leistungsabnehmer (32) Bremswirkung erzeugt wird. Über die Stellelemente (37) kann der zugehörige Thyristor (35) und seine Schaltspannung eingestellt werden.

Eine solche Thyristoreinstellung kann, ggf. in Abstimmung mit dem jeweils eingestellten Leistungsabnehmer (32), derart gewählt werden, dass eine Begrenzung und eine Regelung der maximalen Bewegungsgeschwindigkeit (V,R) erreicht wird. Durch die Bremswirkung kann die Bewegungsgeschwindigkeit (V,R) soweit gesenkt werden, dass die Generatorspannung unter die Schaltspannung des Thyristors (35) fällt und die Bremswirkung reduziert oder abgeschaltet wird. Übersteigt die Generatorspannung bei zunehmender Bewegungsgeschwindigkeit (V,R) wieder die Schaltspannung, tritt erneut Bremswirkung ein und der Ablauf beginnt von neuem.

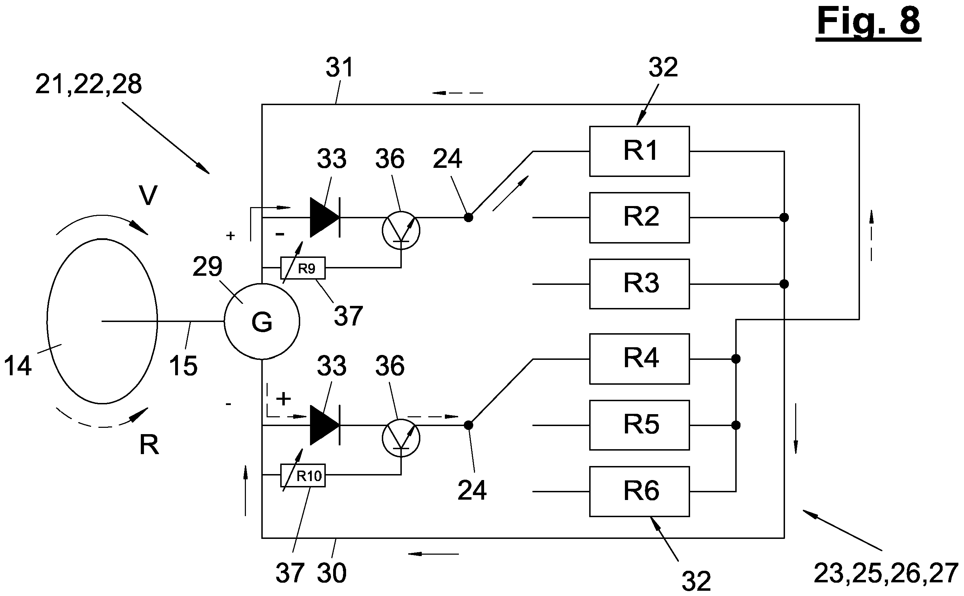

In der Variante von Figur 8 kommt auf der Basis von Figur 5 in dem jeweiligen Stromkreis (30,31) ein Transistor (36) zum Einsatz, welcher zu der Diode (33) in Reihe geschaltet ist und ebenfalls ein Stellelement (37) aufweist. Das als einstellbarer Widerstand ausgebildete Stellelement (37) ist parallel zur Diode (33) geschaltet. Bei niedriger Bewegungsgeschwindigkeit (V,R) und somit geringer Generatorspannung befindet sich der jeweilige Transistor (36) in Sperrstellung und unterbricht den zugehörigen Stromkreis (30,31) unter Bildung einer Anlaufeinrichtung (25). Mit zunehmender Bewegungsgeschwindigkeit (V,R) und steigender Generatorspannung nimmt der Steuerstrom an der Basis des Transistors (36) zu, wobei der in Reihe geschaltete Laststromkreis mit dem Leistungsabnehmer (32) proportional geöffnet und die Bremswirkung entsprechend aktiviert wird. Die Bremswirkung ist umgekehrt proportional zur Generatorspannung und somit zur Bewegungsgeschwindigkeit (V,R). Hierdurch wird eine Regulierungseinrichtung (26) realisiert, die je nach Einstellung und Abstimmung der Stellelemente (37) und des Leistungsabnehmers (32) die Bewegungsgeschwindigkeit (V,R) auf einen eingestellten Wert regelt.

Die Bremseinrichtung (21) ist in den Ausführungsbeispielen von Figur 1 bis 4 dem mobilen Bauteilträger (4) zugeordnet, wobei ein einzelnes Rad (4) mit einer Bremseinrichtung (1) verbunden ist. Alternativ können mehrere Räder oder Rollkörper (14) mit jeweils einer eigenen Bremseinrichtung (21) oder gemeinsam mit einer einzigen Bremseinrichtung (21) verbunden sein.

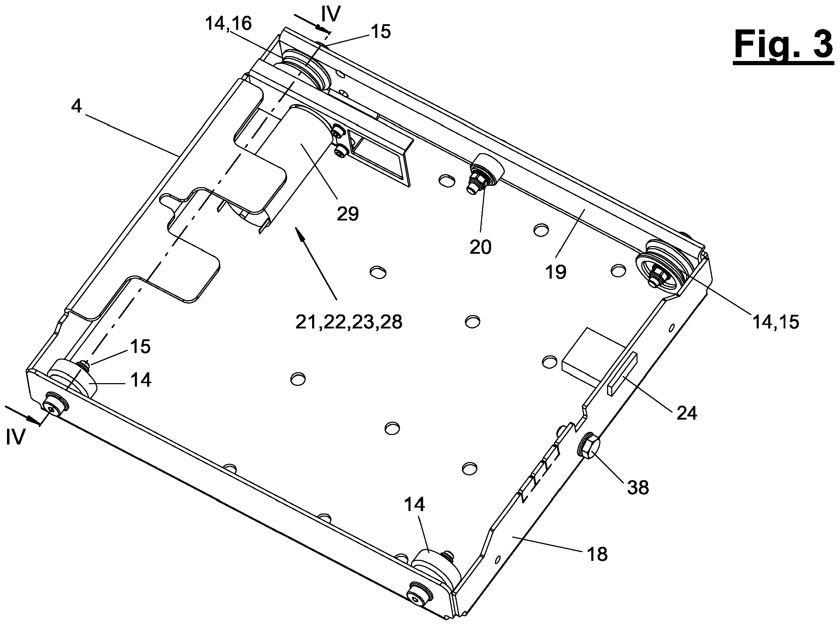

Figur 2 und 3 verdeutlichen die Ausbildung eines solchen Bauteilträgers (4) mit vier Rollkörpern bzw. Räder (14) an den Eckbereichen eines Gestells (18), welches z.B. als rechteckiger, dünnwandiger Blechkasten ausgebildet ist. Die Räder (14) haben jeweils eigene Achsen (15) bzw. Wellen und sind eigenständig drehbar gelagert. Der Bauteilträger (4) weist an einer Längsseite des Gestells (18) einen Achsträger (19) auf, der sich längs der Bewegungsrichtung (V,R) erstreckt und an dem zumindest ein Rad (14) mit einer Bremseinrichtung (21) angeordnet ist. Am Achsträger (19) kann sich ein weiteres Rad (14) befinden, welches frei drehbar oder ebenfalls mit einer Bremseinrichtung (21) verbunden sein kann. Der Achsträger (19) ist am Gestell (18) über ein Schwenklager (20) drehbar gelagert, welches sich zwischen den endseitigen Rädern (14) befindet und eine quer zur Bewegungsrichtung V,R gerichtete Achse hat. Durch eine solche Radlagerung und einen Achsträger (19) kann sicher gestellt werden, dass das bremsbare Rad (14) stets Berührungs- und Reibkontakt mit der Führungsbahn (6,7) hat und die Bremskraft übertragen kann. Die Räder (14) auf der gegenüber liegenden Längsseite des Gestells (18) können frei drehbar und relativ ortsfest am Gestell (18) gelagert sein.

Die Steuereinrichtung (23) mit der elektrischen Schaltung kann auf einer dem Generator (29) zugeordneten Platine angeordnet sein. Die Bremseinrichtung (21), insbesondere die vorbeschriebene generatorische Bremse (28) ist zusammen mit dem beaufschlagten Rad (14) ebenfalls am Achsträger (19) angeordnet. Die Steuereinrichtung (23) kann einen Schalter (24) zum Ein- und Ausschalten sowie zur Einstellung und gegebenenfalls Steuerung der gewünschten Bremswirkung aufweisen. Dieser kann manuell bedienbar sein und kann z.B. an einer quer zur Bewegungsrichtung (V,R) gerichteten Stirnseite des Gestells (18) neben einem axial vorstehenden und schützenden Puffer (38) angeordnet sein. Der Schalter (24) kann ein Bedien- oder Wählschalter sein, mit dem z.B. in den Varianten von Figur 5 bis 8 der jeweils gewünschte Widerstand (R1, R2, R3) bzw. (R4, R5, R6) angewählt wird.

Figur 3 verdeutlicht außerdem die Ausbildung und gegenseitige Anpassung von Führungsmitteln (17) und Rollkörpern (14), insbesondere Rädern. Die einen Rollkörper oder Räder (14), insbesondere diejenigen mit Verbindung zu einer Bremseinrichtung (21), können eine Lauffläche mit einer Umfangsnut (16) aufweisen, die auf einem schienenartigen und gerundeten Führungsmittel (17) aufliegt und mit Formschluss seitlich geführt ist. Die Rollkörper oder Räder (14) auf der anderen Gestellseite können zylindrisch ausgebildet sein und mit einem an der Oberfläche ebenen Führungsmittel (17) zusammen wirken. Bei einer Rollbahnvariante gemäß Figur 9 kann die Zuordnung umgekehrt sein, wobei die Bauteilträger (4) die besagten schienenartigen Führungsmittel aufweisen, die mit entsprechend konturierten stationären Rollkörpern (14) zusammen wirken.

Die vorbeschriebene Zuführeinrichtung (1) kann gemäß Figur 1 und 9 an einer Bearbeitungsstation (2) angeordnet sein, die aus Unfallschutzgründen von einer Schutzeinrichtung (8), z.B. einem Zaun, umgeben ist. Die Zuführeinrichtung (1) dient der unfallsicheren Zuführung von Bauteilen (3) in die Bearbeitungsstation (2) und erstreckt sich durch eine entsprechend konturierte Öffnung in der Schutzeinrichtung (8). Die Beladestelle (9) befindet sich außerhalb und die Entladestelle (10) innerhalb der Schutzeinrichtung (8).

Abwandlungen der gezeigten und beschriebenen Ausführungsformen sind in verschiedener Weise möglich. Die Merkmale der verschiedenen Ausführungsbeispiele können miteinander beliebig kombiniert und vertauscht werden.

Der Leistungsabnehmer (32) kann auf andere Weise als durch die gezeigte Widerstandsanordnung ausgebildet sein. Er kann ggf. als stufenlos einstellbarer elektrischer Widerstand, insbesondere als Potenziometer, ausgebildet sein. Die Einstellung kann über die Steuereinrichtung (23) und einen Dreh- oder Schiebeschalter (24) erfolgen. Die Zahl der Widerstände (R1 - R3) bzw. (R4 - R6) innerhalb der jeweiligen Gruppe kann variieren und kleiner oder größer als drei sein, wobei die Zahl von Gruppe zu Gruppe ebenfalls unterschiedlich sein kann. Eine Leistungsumwandlung bzw. die Bildung einer elektrischen Last zur Erzeugung einer Bremswirkung kann alternativ auf andere Weise erfolgen. Z.B. kann auch ein Stromspeicher geladen werden.

Ansonsten können die elektrischen Schaltungen einer elektrischen Bremse (22), insbesondere einer generatorischen Bremse (28) in anderer geeigneter Weise ausgebildet sein. Statt eines Gleichstromgenerators (29) kann ein Wechselstromgenerator eingesetzt werden. Eine Selektionseinrichtung (27) kann dabei auf andere Weise realisiert werden.
Bei einem Bauteilträger (4) oder einer Rollbahn können mehrere Rollkörper (14) an einer gemeinsamen Achse oder Welle (15) angeordnet sein. Die Bremseinrichtung (21) kann auf eine solche gemeinsame Welle einwirken.

### BEZUGSZEICHENLISTE

- 1: Zuführeinrichtung
- 2: Bearbeitungsstation
- 3: Bauteil
- 4: Bauteilträger, Transportwagen
- 5: Bauteilaufnahme
- 6: Führungsbahn, Zuführbahn
- 7: Führungsbahn, Rücklaufbahn
- 8: Schutzeinrichtung, Zaun
- 9: Beladestelle
- 10: Entladestelle
- 11: Anlieferung, Werker, Förder- und Handhabungsgerät
- 12: Bearbeitungseinrichtung, Roboter
- 13: Greifeinrichtung
- 14: Rollkörper, Rad
- 15: Achse
- 16: Nut
- 17: Führungsmittel
- 18: Gestell
- 19: Achsträger
- 20: Schwenklager
- 21: Bremseinrichtung
- 22: Bremsmittel, elektrische oder mechanische Bremse
- 23: Steuereinrichtung
- 24: Schalter, Bedienschalter, Wählschalter
- 25: Anlaufeinrichtung, Verzögerungseinrichtung,
- 26: Regulierungseinrichtung
- 27: Selektionseinrichtung
- 28: generatorische Bremse
- 29: Generator, Gleichstromgenerator
- 30: Stromkreis Vorwärtsfahrt
- 31: Stromkreis Rückwärtsfahrt
- 32: Leistungsabnehmer, Widerstand
- 33: Diode
- 34: Zenerdiode
- 35: Schaltelement, Thyristor
- 36: Schaltelement, Transistor
- 37: Stellelement, Widerstand
- 38: Puffer

- V: Bewegungsrichtung vorwärts
- R: Bewegungsrichtung rückwärts

## Patentansprüche

1. Zuführeinrichtung für Bauteile (3), wobei die Zuführeinrichtung (1) einen mobilen, bremsbaren Bauteilträger (4) und eine abwärts geneigte Führungsbahn (6,7) aufweist, wobei der Bauteilträger (4) als Transportwagen ausgebildet ist und mehrere Rollkörper (14) für den rollenden Transport des Bauteilträgers (4) sowie mindestens eine mit mindestens einem Rollkörper (14) verbundene Bremseinrichtung (21) aufweist, die den mindestens einen Rollkörper (14) bremst und wobei die Zuführeinrichtung (1) mehrere Führungsbahnen (6,7) aufweist, die als getrennte Zuführ- und Rücklaufbahnen für einen Bauteilträger (4) ausgebildet sind, **dadurch**
**gekennzeichnet, dass** die Bremseinrichtung (21) eine Selektionseinrichtung (27) für eine von der Bewegungsrichtung in Vorwärtsrichtung (V) und in Rückwärtsrichtung (R) des Bauteilträgers (4) abhängige und ggf. unterschiedlich einstellbare Bremswirkung aufweist.

2. Zuführeinrichtung nach Anspruch 1, **dadurch gekennzeichnet, dass** die Bremseinrichtung (21) autark ausgebildet und mit der kinetischen Energie eines mobilen Bauteilträgers (4) betreibbar ist.

3. Zuführeinrichtung nach Anspruch 1 oder 2, **dadurch gekennzeichnet, dass** die Bremseinrichtung (21) eine Steuereinrichtung (23) für ein mit dem mindestens einen Rollkörper (14) verbundenes Bremsmittel (22) aufweist.

4. Zuführeinrichtung nach Anspruch 3, **dadurch gekennzeichnet, dass** die Bremswirkung der Bremseinrichtung (21) von der Steuereinrichtung (23) in Stufen einstellbar oder stufenlos steuerbar ist.

5. Zuführeinrichtung nach einem der vorhergehenden Ansprüche, **dadurch gekennzeichnet, dass** die Bremseinrichtung (21) eine Regulierungseinrichtung (26) für die Bremswirkung aufweist, wobei insbesondere die Drehgeschwindigkeit des mindestens einen Rollkörpers (14) begrenzbar und ggf. regelbar ist.

6. Zuführeinrichtung nach einem der Ansprüche 3 bis 5, **dadurch gekennzeichnet, dass** das Bremsmittel (22) als mechanische Bremse oder als elektrische Bremse, insbesondere als elektrische generatorische Bremse (28) ausgebildet ist.

7. Zuführeinrichtung nach Anspruch 6, **dadurch gekennzeichnet, dass** bei einer elektrischen Bremse, insbesondere einer generatorischen Bremse (28) eine Anlaufeinrichtung (25) und/oder eine Regulierungseinrichtung (26) und/oder eine Selektionseinrichtung (27) als elektrische Schaltung(en) ausgebildet ist oder sind.

8. Zuführeinrichtung nach Anspruch 6 oder 7, **dadurch gekennzeichnet, dass** die generatorische Bremse (28) einen mit einem Rollkörper (14) treibfähig verbundenen elektrischen Generator (29), insbesondere einen Gleichstromgenerator, einen Stromkreis (30,31) und einen elektrischen, bevorzugt variablen und mit der Steuereinrichtung (23) verbundenen Leistungsabnehmer (32), insbesondere einen ohmschen Widerstand, aufweist.

9. Zuführeinrichtung nach einem der Ansprüche 6 bis 8, **dadurch gekennzeichnet, dass** die generatorische Bremse (28) mehrere, insbesondere zwei Stromkreise (30,31) mit jeweils einem eigenständig steuerbaren oder schaltbaren elektrischen Leistungsabnehmer (32) aufweist, die mit dem Gleichstromgenerator (29) mit unterschiedlicher, drehrichtungsabhängiger Polung unter Bildung der Selektionseinrichtung (27) verbunden sind.

10. Zuführeinrichtung nach einem der Ansprüche 6 bis 9, **dadurch gekennzeichnet, dass** ein schaltbarer Leistungsabnehmer (32) mehrere unterschiedlich große elektrische Widerstände (32) aufweist, die von der Steuereinrichtung (23) mittels eines Bedienschalter (24), insbesondere eines Wählschalters, schaltbar sind.

11. Zuführeinrichtung nach einem der vorhergehenden Ansprüche, **dadurch gekennzeichnet, dass** der mindestens eine mit der Bremseinrichtung (21) verbundene Rollkörper (14) eine ausweichfähig an einem Gestell (18) des Bauteilträgers (4) gelagert ist.

12. Zuführeinrichtung nach Anspruch 11, **dadurch gekennzeichnet, dass** der mindestens eine mit der Bremseinrichtung (21) verbundene Rollkörper (14) und mindestens ein weiterer Rollkörper (14) an einem gemeinsamen Achsträger (19) angeordnet sind, welcher sich in Bewegungsrichtung (V,R) des Bauteilträgers (4) erstreckt und am Gestell schwenkbar (20) gelagert ist.

13. Bearbeitungsstation mit einer Bearbeitungseinrichtung (12) und einer umgebenden Schutzeinrichtung (8), insbesondere einem Zaun, und mit einer Zuführeinrichtung (1) für Bauteile (3), die sich durch eine Öffnung in der Schutzeinrichtung (8) erstreckt, **dadurch gekennzeichnet, dass** die Zuführeinrichtung (1) nach mindestens einem der Ansprüche 1 bis 12 ausgebildet ist.

14. Verfahren zum Zuführen von Bauteilen (3) mit einer Zuführeinrichtung nach einem der Ansprüche 1-13, wobei der Bauteilträger (4) zwischen der Rücklaufbahn (7) und der Zuführbahn (6) so umgesetzt wird, dass der Bauteilträger (4) in Vorwärtsrichtung (V) auf der Zuführbahn (6) fährt und in der Rückwärtsrichtung (R) auf der Rücklaufbahn (7) fährt, und wobei der Bauteilträger (4) mittels einer der Bremseinrichtung (21) gebremst wird, die mindestens einem Rollkörper (14) zugeordnet ist und diesen bremst.

## Claims

1. Feed device for components (3), wherein the feed device (1) has a mobile component carrier (4) that is able to be braked and a downwardly inclined guide track (6, 7), wherein the component carrier (4) is in the form of a transport carriage and has a plurality of rolling elements (14) for transporting the component carrier (4) in a rolling manner and at least one brake device (21) connected to at least one rolling element (14), said brake device braking the at least one rolling element (14), and wherein the feed device (1) has a plurality of guide tracks (6, 7), which are in the form of separate feed and return tracks for a component carrier (4), **characterized in that** the brake device (21) has a selection device (27) for a braking action that is dependent on the direction of movement in the forward direction (V) and rearward direction (R) of the component carrier (4) and is optionally settable in different ways.

2. Feed device according to Claim 1, **characterized in that** the brake device (21) is configured in an autonomous manner and is operable with the kinetic energy of a mobile component carrier (4).

3. Feed device according to Claim 1 or 2, **characterized in that** the brake device (21) has a control device (23) for a braking means (22) connected to the at least one rolling element (14).

4. Feed device according to Claim 3, **characterized in that** the braking action of the brake device (21) is settable in steps or controllable in a stepless manner by the control device (23).

5. Feed device according to one of the preceding claims, **characterized in that** the brake device (21) has a regulating device (26) for the braking action, wherein in particular the rotational speed of the at least one rolling element (14) is able to be limited and optionally regulated.

6. Feed device according to one of Claims 3 to 5, **characterized in that** the braking means (22) is in the form of a mechanical brake or of an electric brake, in particular of an electric regenerative brake (28).

7. Feed device according to Claim 6, **characterized in that**, in the case of an electric brake, in particular a regenerative brake (28), a starting device (25) and/or a regulating device (26) and/or a selection device (27) is or are formed as electric circuit(s) .

8. Feed device according to Claim 6 or 7, **characterized in that** the regenerative brake (28) has an electric generator (29) connected in drive terms to a rolling element (14), in particular a DC generator, an electric circuit (30, 31) and an electric, preferably variable power consumer (32) connected to the control device (23), in particular an ohmic resistor.

9. Feed device according to one of Claims 6 to 8, **characterized in that** the regenerative brake (28) has a plurality of, in particular two electric circuits (30, 31) each having an independently controllable or switchable electric power consumer (32), which are connected to the DC generator (29) with different polarity dependent on the direction of rotation, forming the selection device (27).

10. Feed device according to one of Claims 6 to 9, **characterized in that** a switchable power consumer (32) has a plurality of electrical resistors (32) of different sizes, which are switchable by the control device (23) by means of an operating switch (24), in particular a selector switch.

11. Feed device according to one of the preceding claims, **characterized in that** the at least one rolling element (14) connected to the brake device (21) is mounted on a frame (18) of the component carrier (4) in a deflectable manner.

12. Feed device according to Claim 11, **characterized in that** the at least one rolling element (14) connected to the brake device (21) and at least one further rolling element (14) are arranged on a common axle carrier (19) that extends in the direction of movement (V, R) of the component carrier (4) and is mounted in a pivotable manner (20) on the frame.

13. Processing station having a processing device (12) and a surrounding protective device (8), in particular a fence, and having a feed device (1) for components (3), which extends through an opening in the protective device (8), **characterized in that** the feed device (1) is configured according to at least one of Claims 1 to 12.

14. Method for feeding components (3) using a feed device according to one of Claims 1-13, wherein the component carrier (4) is transferred between the return track (7) and the feed track (6) such that the component carrier (4) travels in the forward direction (V) on the feed track (6) and travels in the rearward direction (R) on the return track (7), and wherein the component carrier (4) is braked by means of the brake device (21), which is assigned to at least one rolling element (14) and brakes the latter.

## Revendications

1. Dispositif d'amenée pour des composants (3), le dispositif d'amenée (1) possédant un porte-composant (4) mobile freinable et une bande de guidage (6, 7) inclinée vers le bas, le porte-composant (4) étant réalisé sous la forme d'un chariot de transport et possédant plusieurs corps de roulement (14) pour le transport en roulant du porte-composant (4) ainsi qu'au moins un dispositif de freinage (21) relié à au moins un corps de roulement (14), lequel freine l'au moins un corps de roulement (14) et le dispositif d'amenée (1) possédant plusieurs bandes de guidage (6, 7) qui sont réalisées sous la forme de bandes d'amenée et de retour séparées pour un porte-composant (4), **caractérisé en ce que** le dispositif de freinage (21) possède un dispositif de sélection (27) pour un effet de freinage réglable en fonction de la direction de déplacement et éventuellement différemment dans le sens de la marche avant (V) et dans le sens de la marche arrière (R) du porte-composant (4).

2. Dispositif d'amenée selon la revendication 1, **caractérisé en ce que** le dispositif de freinage (21) est réalisé autonome et peut fonctionner avec l'énergie cinétique d'un porte-composant (4) mobile.

3. Dispositif d'amenée selon la revendication 1 ou 2, **caractérisé en ce que** le dispositif de freinage (21) possède un dispositif de commande (23) pour un moyen de freinage (22) relié à l'au moins un corps de roulement (14) .

4. Dispositif d'amenée selon la revendication 3, **caractérisé en ce que** l'effet de freinage du dispositif de freinage (21) peut être réglé par paliers ou peut être commandé en continu par le dispositif de commande (23).

5. Dispositif d'amenée selon l'une des revendications précédentes, **caractérisé en ce que** le dispositif de freinage (21) possède un dispositif de régulation (26) pour l'effet de freinage, la vitesse de rotation de l'au moins un corps de roulement (14) pouvant notamment être limitée et éventuellement régulée.

6. Dispositif d'amenée selon l'une des revendications 3 à 5, **caractérisé en ce que** le moyen de freinage (22) est réalisé sous la forme d'un frein mécanique ou d'un frein électrique, notamment sous la forme d'un frein électrique régénératif (28).

7. Dispositif d'amenée selon la revendication 6, **caractérisé en ce que** dans le cas d'un freinage électrique, notamment d'un frein régénératif (28), un dispositif de démarrage (25) et/ou un dispositif de régulation (26) et/ou un dispositif de sélection (27) est ou sont réalisé (s) sous la forme d'un (de) circuit (s) électrique(s) .

8. Dispositif d'amenée selon la revendication 6 ou 7, **caractérisé en ce que** le frein régénératif (28) possède un générateur électrique (29) relié avec capacité de motricité à un corps de roulement (14), notamment un générateur de courant continu, un circuit électrique (30, 31) et un récepteur de puissance (32) électrique, notamment une résistance ohmique, de préférence variable et relié au dispositif de commande (23).

9. Dispositif d'amenée selon l'une des revendications 6 à 8, **caractérisé en ce que** le frein régénératif (28) possède plusieurs, notamment deux circuits électriques (30, 31) comprenant respectivement un récepteur de puissance (32) électrique commandable ou commutable de façon autonome, lesquels sont reliés au générateur de courant continu (29) avec une polarité différente, dépendante du sens de rotation, en formant le dispositif de sélection (27).

10. Dispositif d'amenée selon l'une des revendications 6 à 9, **caractérisé en ce qu'**un récepteur de puissance (32) commutable possède plusieurs résistances (32) électriques de valeurs différentes qui peuvent être commutées par le dispositif de commande (23) au moyen d'un commutateur de service (24), notamment d'un sélecteur.

11. Dispositif d'amenée selon l'une des revendications précédentes, **caractérisé en ce que** l'au moins un corps de roulement (14) relié au dispositif de freinage (21) est monté de manière à pouvoir s'écarter sur un bâti (18) du porte-composant (4).

12. Dispositif d'amenée selon la revendication 11, **caractérisé en ce que** l'au moins un corps de roulement (14) relié au dispositif de freinage (21) et au moins un corps de roulement (14) supplémentaire sont disposés sur un porte-axe (19) commun, lequel s'étend dans la direction de déplacement (V, R) du porte-composant (4) et est monté pivotant (20) sur le bâti.

13. Station d'usinage comprenant un dispositif d'usinage (12) et un dispositif de protection (8) enveloppant notamment une clôture, et comprenant un dispositif d'amenée (1) pour des composants (3) qui s'étend à travers une ouverture dans le dispositif de protection (8), **caractérisée en ce que** le dispositif d'amenée est configuré selon au moins l'une des revendications 1 à 12.

14. Procédé pour amener des composants (3) avec un dispositif d'amenée selon l'une des revendications 1 à 13, le porte-composant (4) étant transposé entre la bande de retour (7) et la bande d'amenée (6) de telle sorte que le porte-composant (4), en marche avant (V), circule sur la bande d'amenée (6) et, en marche arrière (R), circule sur la bande de retour (7), et le porte-composant (4) étant freiné au moyen d'un dispositif de freinage (21) qui est associé à au moins un corps de roulement (14) et freine celui-ci.
